# EUROPÄISCHE PATENTSCHRIFT

(11) **EP 3 599 008 B1**
(45) Veröffentlichungstag und Bekanntmachung des Hinweises auf die Patenterteilung: **28.09.2022**
(21) Anmeldenummer: 19179978.2
(22) Anmeldetag: 13.06.2019
(51) Int. Cl.: B01D 46/00, B01D 46/10, B01D 46/52

(54) **FILTERANORDNUNG MIT GELDICHTUNG UND VERWENDUNG EINER SOLCHEN FILTERANORDNUNG**
FILTER ASSEMBLY WITH GEL SEAL AND USE OF SUCH A FILTER
DISPOSITIF FILTRANT POURVU DE JOINT D'ÉTANCHÉITÉ À GEL ET UTILISATION D'UN TEL DISPOSITIF FILTRANT

(30) Priorität: 24.07.2018 EP 18185206
(43) Veröffentlichungstag der Anmeldung: 29.01.2020
(73) Patentinhaber: Carl Freudenberg KG, 69469 Weinheim (DE)
(72) Erfinder: Sieh, Maik, 69207 Sandhausen (DE); Chirnside, Morfula, 68723 Schwetzingen (DE); Schumacher, Sascha, 69483 Wald-Michelbach (DE); Beisel, Tobias, 69509 Mörlenbach (DE)

(56) Entgegenhaltungen:
- EP-A1- 1 266 101
- EP-B1- 2 149 405
- US-A- 5 279 632
- US-A- 5 865 674

## Beschreibung

### Technisches Gebiet

Die Erfindung betrifft eine Filteranordnung gemäß dem Oberbegriff von Anspruch 1 und die Verwendung einer solchen Filteranordnung gemäß Anspruch 9 bzw. 12 und dient der Filtration eines Luftstromes.

### Stand der Technik

Beim Einsatz von Filteranordnungen in der Luftfiltration ist es wichtig, dass der Filter gegenüber dem luftführenden Gehäuse gut abgedichtet und so sichergestellt ist, dass die Luft nicht zwischen Gehäuse und Filter passieren kann. Es soll kein Bypass vorhanden sein und eine leckfreie Abdichtung vorliegen.

In der US 2009/0056293 A1 wird dieser Anforderung begegnet, indem ein Luftfiltrationssystem vorgeschlagen wird, welches ineinandergreifende Rahmenelemente und als Dichtelement zusätzliche überstehende Laschen des Filtermaterials besitzt. Ein solches Luftfiltrationssystem hat zum einen einen komplizierten Aufbau. Zum anderen ist bei der Montage des Filters genauestens darauf zu achten, dass die zusätzlichen Laschen nicht beschädigt werden. Anderenfalls wird ein Bypass geschaffen und die Effizienz des Filtersystems wird beeinträchtigt.

Auch sind aus dem Stand der Technik andere Methoden zur Abdichtung von Filtern bekannt. In Hauben für Luftkonditionierungseinrichtungen für Reinräume kommen Gelkanäle mit darin eingreifenden Schwertern zum Einsatz. Ein solcher Filter ist z.B. in der EP 2 149 405 B1 beschrieben. Derartige Dichtlösungen können jedoch nicht in der ersten Filterstufe zum Einsatz kommen, da durch das Rohgas ein Eintrag von Partikeln in das Gel erfolgen würde und sich eine schnelle Alterung des Gels ergäbe. Eine solche Dichtlösung würde keine leckfreie Abdichtung ermöglichen. Eine weitere Anordnung mit Geldichtung ist aus der EP 1 266 101 A1 bekannt.

### Aufgabenstellung

Aufgabe der vorliegenden Erfindung ist es eine Filteranordnung zu schaffen, die bei einer einfach zu handhabenden Montage eines Filterelements eine leckfreie Abdichtung sicherstellt.

### Technische Lösung

Gelöst wird diese Aufgabe durch eine Filteranordnung mit den Merkmalen von Anspruch 1.

Die erfindungsgemäße Filteranordnung besitzt ein Filterelement und das Filterelement wird in einer ersten Filterstufe eingesetzt. Erste Filterstufe meint hier, dass das zu filternde Rohgas direkt - ohne Vorfilter - an dem Filterelement anliegt und hier zum ersten Mal gefiltert wird. Die Filteranordnung kann noch weitere Filterelemente in weiteren nachgelagerten Filterstufen besitzen. Weiter besitzt die Filteranordnung ein Gehäuse zur Aufnahme des Filterelements. Das Filterelement weist dabei ein Filtermaterial auf zur Filtration eines Luftstroms. In vorteilhafter Weise ist zwischen dem Filterelement und dem Gehäuse eine um das Filterelement umlaufende Geldichtung angeordnet zur Abdichtung des Filterelements gegenüber dem Gehäuse. Die Geldichtung ist dabei als Gelkanal ausgeführt, nämlich als nutförmiger Kanal mit einer Gelfüllung, wobei als Gel zum Beispiel PU oder Silikon verwendet werden können. Vorteilhaft besitzt die Filteranordnung ein um das Filterelement umlaufendes Schwert, welches in montiertem Zustand des Filters im Gehäuse in die Geldichtung, nämlich in die Gelfüllung des Gelkanals, eintaucht und besitzt weiter ein um das Filterelement umlaufendes Abdeckelement zum Abdecken des Gelkanals auf der Rohgasseite der Filteranordnung. Das Abdeckelement trägt dazu bei, einen Schmutzeintrag, zum Beispiel von Staub, durch den Luftstrom zu verhindern oder zumindest zu vermindern. In einer solchen Filteranordnung wird eine einfache Montage des Filterelements ermöglicht, und gleichzeitig eine leckfreie Abdichtung sichergestellt.

Für eine effektive Abdichtung und einen verminderten Schmutzeintrag in das Gel des Gelkanals ergibt sich, dass der Gelkanal, das Schwert und das Abdeckelement in einer Draufsicht die gleiche Form besitzen, derart, dass das Schwert in etwa mittig in den Gelkanal eintauchen kann und dass der zur Rohgasseite hin offene Teil des Gelkanals zwischen dem Schwert und der Begrenzung des Gelkanals von dem Abdeckelement abgedeckt wird.

In vorteilhafter Weiterbildung der erfindungsgemäßen Filteranordnung sind unterschiedliche Ausgestaltungen des Schwerts möglich.
- In einer ersten Variante wird das Schwert durch eine im Vergleich zu den übrigen Faltabschnitten längere Endfalte des Filtermaterials gebildet.
- In einer zweiten Variante wird das Schwert durch einen an das Faltenpaket angeklebten Kantenstreifen gebildet.
- In einer dritten Variante wird das Schwert durch einen aus einem Filterrahmen zur Halterung des Filterelements hervorstehenden Steg gebildet, ähnlich einem Flansch und ist ausformt als gegenüber der Oberfläche des Filterrahmens erhabene Leiste.
- In einer vierten Variante wird das Schwert durch einen aus dem Gehäuse hervorstehenden Steg gebildet, ausgeführt als gegenüber der Oberfläche des Gehäuses erhabene Leiste.

Hat das Filterelement eine hexaederförmige Grundgestalt, so kann das Schwert in einer bevorzugten Ausführungsform an zwei gegenüberliegenden Seiten durch je eine Endfalte des Filtermaterials und an den beiden anderen Seiten durch einen Kantenstreifen gebildet werden. Vorteil dieser Ausführungsform ist ein besonders geringer Materialeinsatz.

In einer alternativen, ebenfalls besonders vorteilhaften Ausführungsform ist das Schwert nur durch Kantenstreifen gebildet. Vorteil dieser Ausführungsform ist eine besonders einfache Fertigung der Filteranordnung. Weitere Kombinationen zur Bildung des Schwertes aus den vorgenannten Varianten sind denkbar.

In vorteilhafter Weiterbildung der erfindungsgemäßen Filteranordnung kann das Abdeckelement unterschiedliche Ausformungen besitzen.
- In einer ersten Variante wird das Abdeckelement durch eine streifenförmige Lasche an der Endfalte des Filtermaterials gebildet, zum Beispiel durch eine V-Lasche. Unter einer V-Lasche wird dabei ein unter einem Winkel von der Endfalte abstehender Faltenabschnitt verstanden, wobei die Lasche materialeinheitlich und einteilig mit dem Filtermaterial ist.
- In einer zweiten Variante wird das Abdeckelement durch eine streifenförmige Lasche an einem, an das Faltenpaket angeklebten Kantenstreifen gebildet, zum Beispiel durch eine V-Lasche. Unter einer V-Lasche wird dabei ein unter einem Winkel von dem Kantenstreifen abstehender Faltenabschnitt verstanden, wobei die Lasche materialeinheitlich und einteilig mit dem Kantenstreifen ist.

- In einer dritten Variante wird das Abdeckelement durch einen Filterrahmen zur Halterung des Filterelements gebildet.
- In einer vierten Variante wird das Abdeckelement durch ein am Filterelement angebrachtes separates Dichtelement gebildet.
- In einer fünften Variante wird das Abdeckelement durch das Gehäuse selbst gebildet.

Hat das Filterelement eine hexaederförmige Grundgestalt, so kann das Abdeckelement in einer bevorzugten Ausführungsform an zwei gegenüberliegenden Seiten durch je eine streifenförmige Lasche an der Endfalte des Filtermaterials und an den beiden anderen Seiten durch eine streifenförmige Lasche an einem Kantenstreifen gebildet werden. Vorteil dieser Ausführungsform ist ein besonders geringer Materialeinsatz.

In einer alternativen, ebenfalls vorteilhaften Ausführungsform ist das Abdeckelement nur durch streifenförmige Laschen an Kantenstreifen gebildet. Vorteil dieser Ausführungsform ist eine besonders einfache und kostengünstige Fertigung. Weitere Kombinationen der vorgenannten Varianten zur Bildung des Abdeckelements sind denkbar.

Bezüglich der Positionierung des Gelkanals bestehen zwei unterschiedliche Möglichkeiten. Der umlaufende Gelkanal kann entweder am Filterelement oder am Gehäuse angebracht sein. Mit jeder der beiden Möglichkeiten sind unterschiedliche Vorteile verbunden. Bei einer Positionierung des umlaufenden Gelkanals am Filterelement kann auf besonders einfache Weise eine Erneuerung des Gelkanals zusammen mit dem Austausch des Filterelements erfolgen. Eine Positionierung des umlaufenden Gelkanals am Gehäuse hat den Vorteil, dass trotz eines Austauschs des Filterelements der Gelkanal weiterverwendet werden kann. Abhängig vom Einsatzort der Filteranordnung und dem Verschmutzungsgrad des zu reinigenden Luftstroms und den Umgebungsbedingungen kann eine der beiden Möglichkeiten gewählt werden.

In einer besonders vorteilhaften Weiterbildung der Filteranordnung kann das Filtermaterial als plissiertes Faltenpaket ausgebildet sein, als sogenannter Faltenpack mit einem zickzackförmigem Faltenbalg aus einem organischen oder anorganischen Vliesstoff.

In vorteilhafter Weiterbildung der Filteranordnung kann das Filterelement und insbesondere ein Rahmen des Filterelements mit einem Befestigungsmechanismus ausgestattet sein, der die Position des Schwertes in dem Gelkanal mindestens zweier in Reihe geschalteter Filterelemente definiert und somit insbesondere die Eindringtiefe des Schwertes in den Gelkanal definiert und begrenzt.

Die Erfindung betrifft auch eine Filteranordnung mit mindestens einem weiteren Filterelement in einer weiteren Filterstufe. Das weitere Filterelement weist ein Filtermaterial auf zur Filtration des Luftstroms. Die Filteranordnung ist also mehrstufig aufgebaut.

In einer ersten Variante ist zwischen dem erstem und dem mind. einen weiteren Filterelement eine weitere umlaufende Geldichtung angeordnet zur Abdichtung der Filterelemente gegeneinander.

In einer zweiten Variante ist zwischen einem jeweiligen Filterelement und dem Gehäuse jeweils eine umlaufende Geldichtung angeordnet zur Abdichtung eines jeweiligen Filterelements gegenüber dem Gehäuse.

Die Erfindung betrifft auch die Verwendung einer Filteranordnung, wie obenstehend beschrieben, als Innenraumluftfilter zur Filtration der Kabinenzuluft in einem Fahrzeug. Die Filteranordnung kann zur Frischluftfiltration oder zur Umluftfiltration genutzt werden. Bei dem Fahrzeug kann es sich insbesondere um ein in der Landwirtschaft genutztes Fahrzeug handeln, zum Beispiel einen Traktor oder eine Erntemaschine.

Die Erfindung betrifft auch die Verwendung einer Filteranordnung, wie obenstehend beschrieben, als Kathodenzuluftfilter in einem Brennstoffzellensystem.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine erste Ausführungsform einer erfindungsgemäßen Filteranordnung
- Fig. 2: eine zweite Ausführungsform einer erfindungsgemäßen Filteranordnung
- Fig. 3: eine dritte Ausführungsform einer erfindungsgemäßen Filteranordnung
- Fig. 4: eine vierte Ausführungsform einer erfindungsgemäßen Filteranordnung
- Fig. 5: eine fünfte Ausführungsform einer erfindungsgemäßen Filteranordnung
- Fig. 6: eine sechste Ausführungsform einer erfindungsgemäßen Filteranordnung
- Fig. 7: eine siebte Ausführungsform einer erfindungsgemäßen Filteranordnung
- Fig. 8: eine achte Ausführungsform einer erfindungsgemäßen Filteranordnung
- Fig. 9: eine erfindungsgemäße Filteranordnung mit zwei Filterstufen
- Fig. 10: eine erfindungsgemäße Filteranordnung mit drei Filterstufen
- Fig. 11: eine erfindungsgemäße Filteranordnung mit mehreren Filterstufen und Mitteln zum Verbinden der Filterelemente

Die Erfindung betrifft eine Filteranordnung 10 und die Verwendung einer solchen Filteranordnung und dient der Filtration eines Luftstromes. Die erfindungsgemäße Filteranordnung 10 besitzt ein Filterelement 1 in einer ersten Filterstufe und ein Gehäuse 20 zur Aufnahme des Filterelements 1, wobei das Filterelement 10 ein Filtermaterial 2 aufweist. In vorteilhafter Weise ist zwischen dem Filterelement 1 und dem Gehäuse 20 eine umlaufende Geldichtung 4 angeordnet zur Abdichtung des Filterelements 1 gegenüber dem Gehäuse 20. Diese ist als Gelkanal 4.1 ausgeführt. Durch diese Filteranordnung 10 wird eine einfach zu handhabende Montage eines Filterelements 1 und eine leckfreie Abdichtung im montierten Zustand sichergestellt

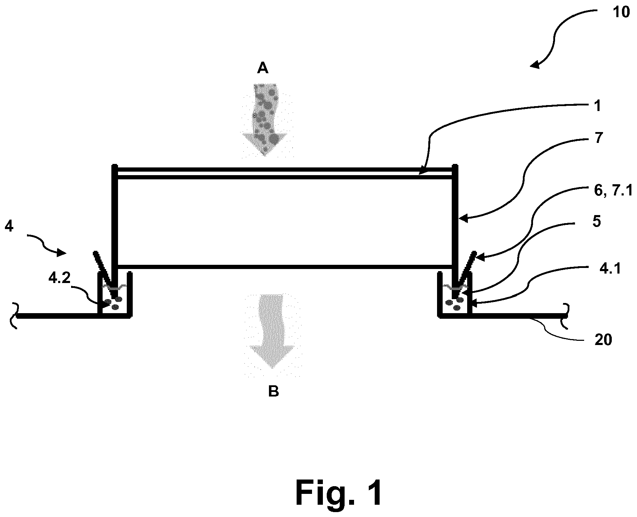

In Figur 1 ist eine erste Ausführungsform einer Filteranordnung 10 dargestellt. Die Filteranordnung 10 besitzt ein Filterelement 1, welches an einem Gehäuse 20 befestigt wird. Ein Luftstrom - dargestellt durch Pfeile - strömt von der Rohgasseite A durch das Filterelement 1 hindurch zur Reingasseite B. Das Filterelement 1 ist an dem Gehäuse 20 leckagefrei montiert und es gibt keinen Bypass für den Luftstrom zwischen Filterelement 1 und Gehäuse 20. Dazu weist die Filteranordnung 10 ein Geldichtung 4 auf, welche umlaufend zu dem Filterelement 1 ausgestaltet ist und sich entlang der Öffnung in dem Gehäuse 20 erstreckt. Die Geldichtung 4 besitzt einen nutförmigen Gelkanal 4.1, welcher mit einem Gel 4.2 (dargestellt durch mehrere Punkte) gefüllt ist. An dem Filterelement 1, welches ein plissiertes Faltenpaket 3 umfasst, sind an den Seitenflächen des Faltenpakets 3 Kantenstreifen 7 angeklebt. Diese Kantenstreifen 7 bilden an ihrem unteren Ende jeweils ein Schwert 5 aus, welches in den Gelkanal 4.1 eintaucht. Dadurch erfolgt eine Abdichtung auf der Rohgasseite A zwischen dem Filterelement 1 und dem Gehäuse 20. Die Kantenstreifen 7 sind zusätzlich mit einer Lasche 7.1 versehen, so dass sich eine in etwa V-förmige Ausgestaltung des Kantenstreifens 7 ergibt. Die Lasche 7.1 kann daher auch als V-Lasche bezeichnet werden. Die V-Lasche stellt ein unter einem Winkel von dem Kantenstreifen abstehenden Faltenabschnitt dar, welcher materialeinheitlich und einteilig mit dem Kantenstreifen 7 ist. Die Lasche 7.1 liegt mit ihrer Unterseite auf einer Oberkante des Gelkanals 4.1 auf und bildet somit ein Abdeckelement 6 des Gelkanals 4.1. Durch das Abdeckelement 6 wird verhindert, dass Partikel von der Rohgasseite A in das Gel 4.2 eingetragen werden, was zu einer Verschmutzung und vorzeitigen Alterung des Gels 4.2 führen würde.

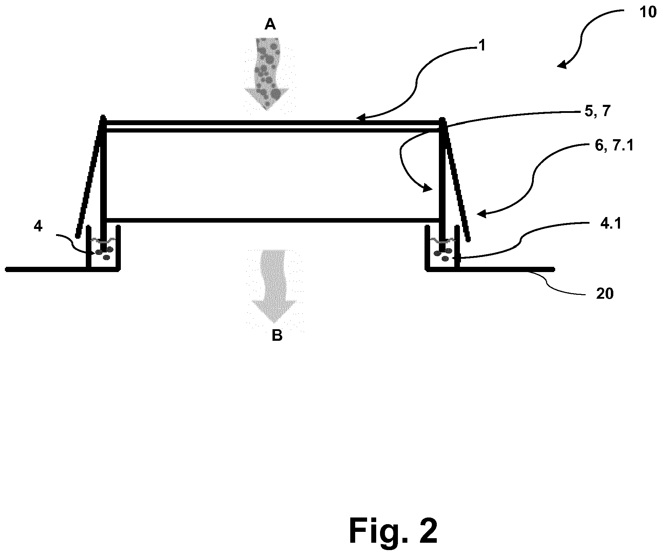

In Figur 2 ist eine ähnliche Ausführung der Filteranordnung 10 dargestellt, wobei das Abdeckelement 6 eine unterschiedliche Ausgestaltung aufweist: Das Abdeckelement 6 wird ebenfalls durch einen Teil des Kantenstreifens 7 gebildet. Dazu ist eine Lasche 7.1 des Kantenstreifens 7 vorgesehen, welche am oberen Ende des Kantenstreifens 7 den Kantenstreifen 7 berührt. Die Lasche 7.1 kann dabei durch eine Faltung des Kantenstreifens 7 gebildet werden oder kann durch Ankleben oder anderweitiges Befestigen eines weiteren Kantenstreifens an dem Kantenstreifen 7 erzeugt werden. Das untere Ende der Lasche 7.1 überdeckt den Gelkanal 4.1 ähnlich einem Walmdach. Durch das Abdeckelement 6 wird ein Eintrag von Schmutz in das Gel 4.2 verhindert.

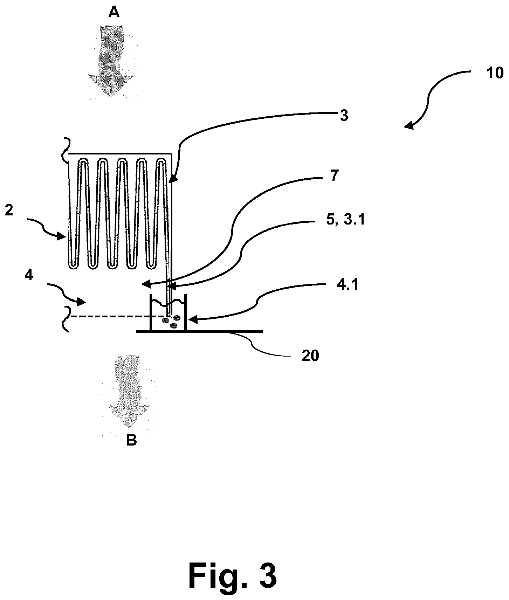

In der in Figur 3 ausschnittsweise dargestellten Ausführungsvariante der Filteranordnung 10 wird das Schwert 5 auf zwei Seiten des plissierten Faltenpakets 3 durch eine verlängerte Endfalte 3.1 des Faltenpakets gebildet. Dargestellt in Figur 3 ist nur eine Seite des plissierten Faltenpakets 3. Wie zu erkennen, wird das plissierte Faltenpaket 3 durch zickzackförmig gefaltetes Filtermaterial aus Vliesstoff 2 gebildet. Auf den beiden anderen Seiten des plissierten Faltenpakets 3, welche vor und hinter der Zeichenebene liegen, wird das Schwert 5 durch Kantenstreifen 7 gebildet, welche mit dem Faltenpaket 3 verbunden sind. Die Kantenstreifen 7 sind in der Darstellung von Figur 3 durch eine gestrichelte Linie angedeutet. Zur besseren Übersichtlichkeit ist das Abdeckelement 6 in Figur 3 nicht dargestellt. Das Abdeckelement 6 kann beispielsweise wie in Figur 2 dargestellt ausgeführt sein.

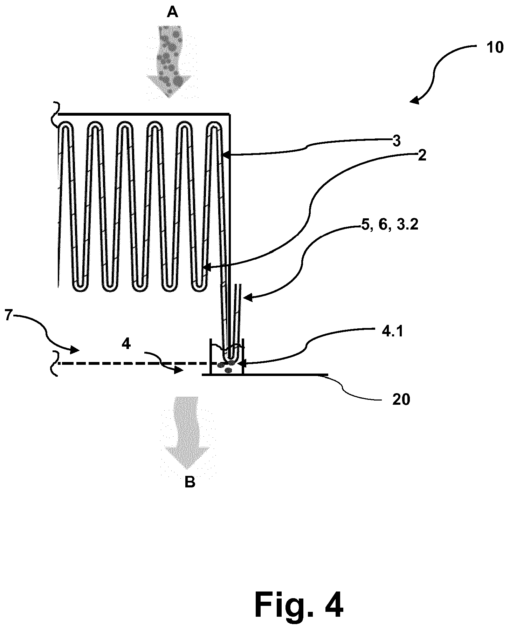

Alternativ kann das Abdeckelement 6 auf den beiden Seiten der Endfalte 3.1 auch durch das Vorsehen einer zusätzlichen Lasche 3.2 realisiert werden, wie dies in Figur 4 dargestellt ist. Dazu wurde in die Endfalte 3.1 eine weitere Faltung eingebracht, welche eine Lasche 3.2 ausbildet, die mit ihrer Unterseite auf dem Rand des Gelkanals 4.1 aufliegt. Auch so kann verhindert werden, dass Schmutz in den Gelkanal 4.1 eindringt.

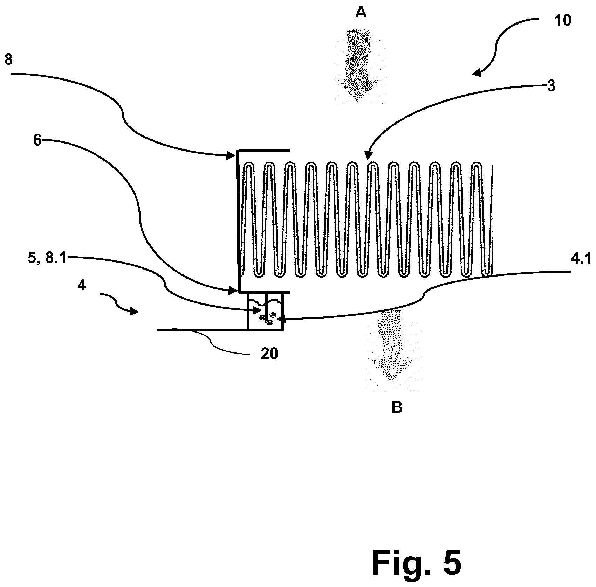

In der in Figur 5 dargestellten Ausführungsvariante der Filteranordnung 10 ist das plissierte Faltenpaket 3 mit einem Filterrahmen 8 versehen. An der Unterseite des Filterrahmens 8 ist ein umlaufender Steg 8.1 angebracht, welcher ein Schwert 5 bildet, das in den Gelkanal 4.1 eintaucht. Das Abdeckelement 6 des Gelkanals 4.1 wird durch den Filterrahmen 8 selbst gebildet, so dass keine weiteren Elemente erforderlich sind.

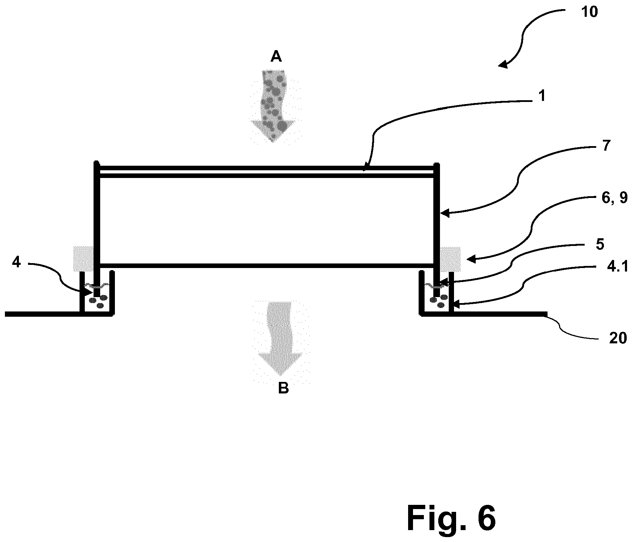

Aus Figur 6 geht eine alternative Variante zur Ausgestaltung des Abdeckelements 6 hervor. Diese kann mit den unterschiedlichen obenstehend beschriebenen Ausführungsvarianten des Schwerts 5 kombiniert werden. Dabei wird das Abdeckelement 6 durch ein, um das plissierte Faltenpaket 3 umlaufendes, Dichtelement 9 gebildet, wobei das Dichtelement 9 an dem Filterelement 1 angebracht ist, zum Beispiel mit diesem verklebt ist.

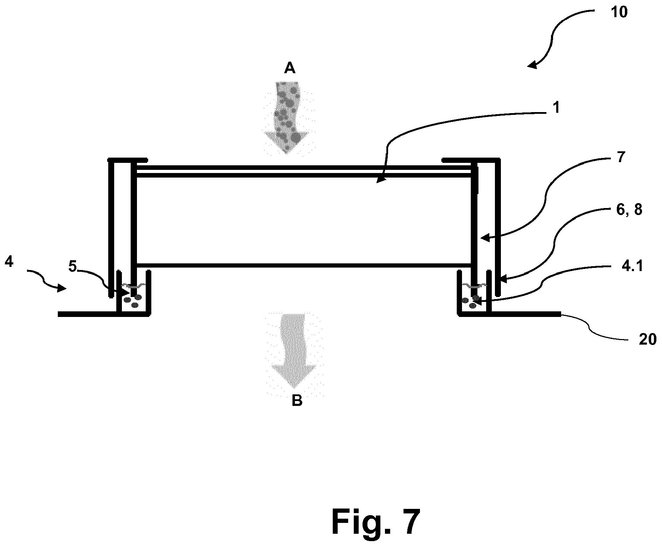

Eine weitere Variante zur Ausgestaltung des Abdeckelements 6 ist in Figur 7 dargestellt. Auch hier kann das Schwert 5 gemäß einer der obenstehend beschriebenen Ausführungsvarianten ausgeführt sein. Das Abdeckelement 6 wird durch eine Rahmenkonstruktion eines Filterrahmens 8 gebildet. Dazu umfasst die Rahmenkonstruktion 8 sowohl das Filterelement 1 als auch den Gelkanal 4.1. In anderen Worten: Die Außenkanten des Filterelements 1 sowie die Außenkanten des Gelkanals 4.1 liegen innerhalb der Rahmenkonstruktion des Filterrahmens 8. Der Filterrahmen 8 weist gegenüber der Kante des Gelkanals 4.1 einen Überhang auf, so dass im Bereich des Gelkanals 4.1 ein Überlapp besteht.

In allen Ausführungsvarianten gemäß den Figuren 6 bis 7 ist der Gelkanal 4.1 am Gehäuse 20 angebracht. Das Schwert 5 hingegen ist mit dem Filterelement 1 verbunden. Die Montage des Filterelements 1 erfolgt derart, dass das Filterelement 1 in das Gehäuse 20 eingesetzt bzw. eingeschoben wird, wobei das Schwert 5 in den Gelkanal 4.1 eintaucht. Wird ein Austausch des Filterelements 1 erforderlich, zum Beispiel weil dieses nicht mehr die erforderliche Filterleistung erfüllt, so verbleibt der Gelkanal 4.1 am Gehäuse 20 und kann mit einem neu eingesetzten Filterelement 1 weiter verwendet werden.

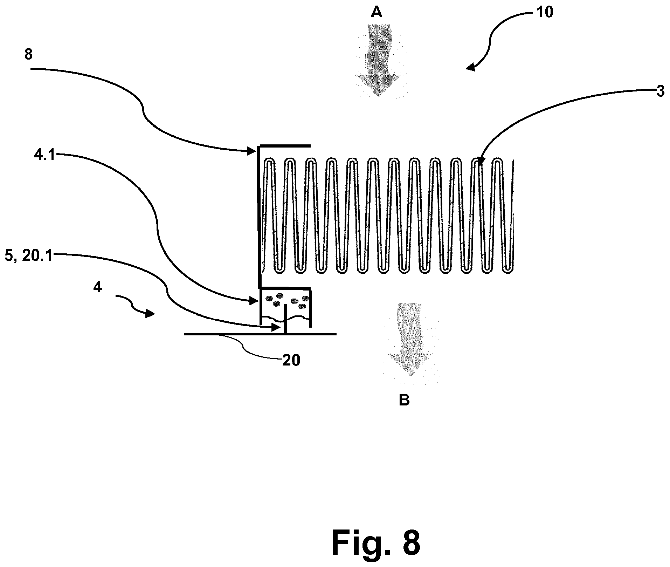

In der Filteranordnung 10, wie sie in Figur 8 dargestellt ist, wird ein anderer Ansatz verfolgt. Der Gelkanal 4.1 ist dabei an einem Filterrahmen 8 des Filterelements 1 befestigt. Das Schwert 5 hingegen wird durch einen Steg 20.1 am Gehäuse 20 ausgebildet. Der Steg 20.1 ist dabei als gegenüber der Oberfläche des Gehäuses 20 erhabene Leiste ausgebildet. Bei der Montage des Filterelements 1 an das Gehäuse 20 wird das Filterelement 1 in das Gehäuse 20 eingesetzt bzw. eingeschoben, derart, dass der Gelkanal 4.1 an das am Gehäuse 20 feststehende Schwert 5 eindringt. Bei dieser Ausführungsvariante erfolgt somit bei einem Austausch des Filterelements 1 gleichzeitig ein Austausch der Geldichtung 4.

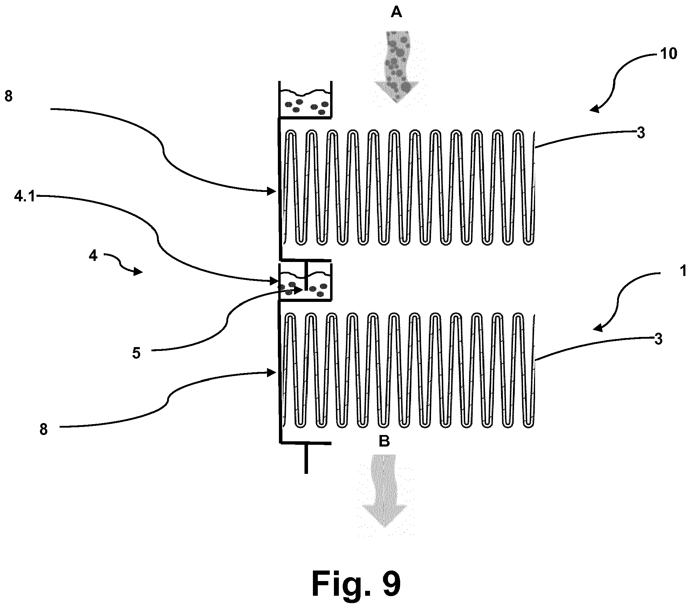

In Fig. 9 ist eine Filteranordnung 10 mit zwei Filterstufen aufweisend zwei Filterelemente 1 dargestellt. Zwischen dem erstem und dem mind. einen weiteren Filterelement 1 ist eine weitere umlaufende Geldichtung 4 angeordnet zur Abdichtung der Filterelemente 1 gegeneinander. Die Abdeckelemente 6 können wie bei den zuvor beschriebenen Ausführungsbeispielen ausgestaltet sein.

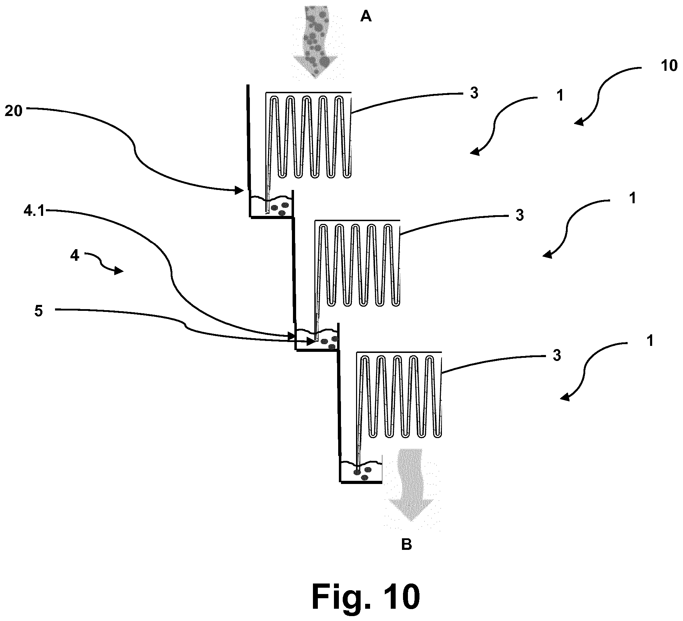

In Fig. 10 ist eine Filteranordnung 10 mit drei Filterstufen aufweisend drei Filterelemente 1 dargestellt. Zwischen einem jeweiligen Filterelement 1 und dem Gehäuse 20 ist jeweils eine umlaufende Geldichtung 4 angeordnet zur Abdichtung eines jeweiligen Filterelements 1 gegenüber dem Gehäuse 20. Die Abdeckelemente 6 können wie bei den zuvor beschriebenen Ausführungsbeispielen ausgestaltet sein.

Auch in den Ausführungen der Filteranordnung mit mehreren Filterstufen sind die Geldichtungen 4 wie obenstehend beschrieben ausgeführt.

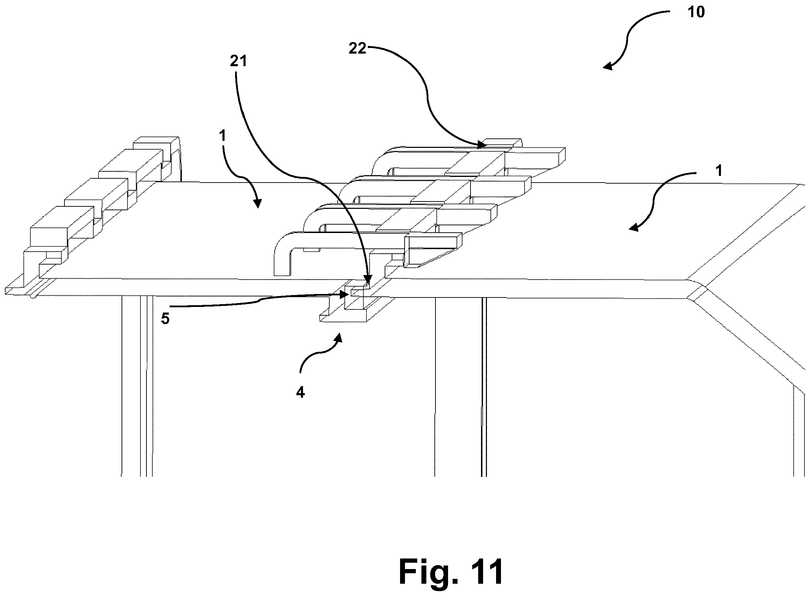

In Fig. 11 ist eine Variante mit mehreren Filterstufen gezeigt, wobei ein Ausschnitt von zwei Filterstufen dargestellt ist. In der Filteranordnung 10 ist die Filteranordnung 10 mit einem Befestigungsmechanismus 21 ausgestattet, welcher als Anschlag ausgestaltet ist. Dieser definiert die Position des Schwertes 5 in dem Gelkanal 4.1 der weiteren umlaufenden Geldichtung 4 zwischen dem erstem und dem mindestens einen weiteren Filterelement 1 und definiert und begrenzt somit insbesondere die Eindringtiefe des Schwertes 5 in den Gelkanal 4.1. Um die beiden Filterelemente 1 mit ihren beiden Filterstufen relativ zueinander zu fixieren sind zusätzlich Einrastelemente 22 in Form von Klipsen vorgesehen.

### Bezugszeichenliste

- 1: Filterelement
- 2: Filtermaterial Vliesstoff
- 3: plissiertes Faltenpaket
- 3.1: Endfalte
- 3.2: Lasche
- 4: Geldichtung
- 4.1: Gelkanal
- 4.2: Gel
- 5: Schwert
- 6: Abdeckelement
- 7: Kantenstreifen
- 7.1: Lasche
- 8: Filterrahmen
- 8.1: Steg
- 9: Dichtelement
- 10: Filteranordnung
- 20: Gehäuse
- 20.1: Steg
- 21: Befestigungsmechanismus
- 22: Einrastelemente

- A: Rohgasseite
- B: Reingasseite

## Patentansprüche

1. Filteranordnung (10) mit einem Filterelement (1) in einer ersten Filterstufe, wobei das Filterelement (10) ein Filtermaterial (2) aufweist zur Filtration eines Luftstroms, und mit einem Gehäuse (20) zur Aufnahme des Filterelements (1),
wobei zwischen dem Filterelement (1) und dem Gehäuse (20) eine umlaufende Geldichtung (4) angeordnet ist mit einem Gelkanal (4.1) zur Abdichtung des Filterelements (1) gegenüber dem Gehäuse (20), wobei die Filteranordnung (10) ein umlaufendes Schwert (5) besitzt welches in den Gelkanal (4.1) eintaucht, **dadurch gekennzeichnet, dass** die Filteranordnung (10) ein umlaufendes Abdeckelement (6) besitzt zum Abdecken des Gelkanals (4.1) auf der Rohgasseite (A) der Filteranordnung (10).

2. Filteranordnung nach Anspruch 1, **dadurch gekennzeichnet,**
**dass** das Schwert (5) durch
- eine Endfalte (3.1) des Filtermaterials (2) und/oder
- einen an dem Faltenpaket (3) befestigten, insbesondere angeklebten Kantenstreifen (7) und/oder
- einen aus einem Filterrahmen (8) hervorstehenden Steg (8.1) und/oder
- einem aus dem Gehäuse (20) hervorstehenden Steg (20.1) gebildet wird.

3. Filteranordnung nach Anspruch 1 oder 2, **dadurch gekennzeichnet, dass** das Abdeckelement (6) durch
- eine streifenförmige Lasche (3.2) an der Endfalte (3.1) des Filtermaterials (2) und/oder
- eine streifenförmige Lasche (7.1) an einem an dem Faltenpaket (3) befestigten, insbesondere angeklebten Kantenstreifen (7) und/oder
- einen Filterrahmen (8) zur Halterung des Filterelements (1) und/oder
- ein am Filterelement (1) angebrachtes Dichtelement (9) und/oder
- das Gehäuse (20)
gebildet wird.

4. Filteranordnung nach einem der Ansprüche 1 bis 3, **dadurch gekennzeichnet,**
**dass** der umlaufende Gelkanal (4.1) am Filterelement (1) oder am Gehäuse (20) angebracht ist.

5. Filteranordnung nach einem der vorangehenden Ansprüche, **dadurch gekennzeichnet,**
**dass** das Filtermaterial (2) als plissiertes Faltenpaket (3) ausgebildet ist.

6. Filteranordnung nach einem der vorangehenden Ansprüche, **dadurch gekennzeichnet,**
**dass** mindestens ein weiteres Filterelement (1) in einer weiteren Filterstufe vorgesehen ist, wobei das weitere Filterelement (1) ein Filtermaterial (2) aufweist zur Filtration eines Luftstroms, und zwischen dem erstem und dem mindestens einen weiteren Filterelement (1) eine weitere umlaufende Geldichtung (4) angeordnet ist zur Abdichtung der Filterelemente (1) gegeneinander.

7. Filteranordnung nach einem der Ansprüche 1 - 5 , **dadurch gekennzeichnet,**
**dass** mindestens ein weiteres Filterelement (1) in einer weiteren Filterstufe vorgesehen ist, wobei das weitere Filterelement (1) ein Filtermaterial (2) aufweist zur Filtration eines Luftstroms, und zwischen einem jeweiligen Filterelement (1) und dem Gehäuse (20) jeweils eine umlaufende Geldichtung (4) angeordnet ist zur Abdichtung eines jeweiligen Filterelements (1) gegenüber dem Gehäuse (20).

8. Filteranordnung nach einem der Ansprüche 6 oder 7, **dadurch gekennzeichnet, dass** die Filteranordnung (10) mit einem Befestigungsmechanismus (21) ausgestattet ist, der die Position des Schwertes (5) in dem Gelkanal (4.1) der weiteren umlaufenden Geldichtung (4) zwischen dem erstem und dem mindestens einen weiteren Filterelement (1) definiert und insbesondere die Eindringtiefe des Schwertes (5) in den Gelkanal (4.1) definiert und begrenzt.

9. Verwendung einer Filteranordnung nach einem der vorangehenden Ansprüche als Innenraumluftfilter zur Filtration der Kabinenzuluft in einem Fahrzeug.

10. Verwendung einer Filteranordnung nach Anspruch 8 als Frischluftfilter
zur Filtration der Kabinenzuluft in einem landwirtschaftlich genutzten Fahrzeug.

11. Verwendung einer Filteranordnung nach einem der Ansprüche 9 oder 10 mit einer Filteranordnung nach einem der Ansprüche 1 bis 5, wobei das Filterelement in der ersten Filterstufe eingesetzt wird.

12. Verwendung einer Filteranordnung nach einem der Ansprüche 1 bis 8 als Kathodenzuluftfilter in einem Brennstoffzellensystem.

## Claims

1. Filter arrangement (10) having a filter element (1) in a first filter stage, wherein the filter element (1) comprises a filter material (2) for the filtration of an air stream, and having a housing (20) for accommodating the filter element (1),
wherein an encircling gel seal (4) is arranged between the filter element (1) and the housing (20) and has a gel channel (4.1) for sealing the filter element (1) in relation to the housing (20),
wherein the filter arrangement (10) has an encircling tongue (5), which penetrates into the gel channel (4.1), **characterized in that** the filter arrangement (10) has an encircling covering element (6) in order to cover the gel channel (4.1) on the raw-gas side (A) of the filter arrangement (10).

2. Filter arrangement according to Claim 1, **characterized in that** the tongue (5) is formed by
- an end fold (3.1) of the filter material (2), and/or
- an edge strip (7), which is fastened on, in particular adhesively bonded to, the fold assembly (3), and/or
- a crosspiece (8.1), which projects out of a filter frame (8), and/or
- a crosspiece (20.1), which projects out of the housing (20) .

3. Filter arrangement according to Claim 1 or 2, **characterized in that** the covering element (6) is formed by
- a strip-formed lug (3.2) on the end fold (3.1) of the filter material (2), and/or
- a strip-formed lug (7.1) on an edge strip (7), which is fastened on, in particular adhesively bonded to, the fold assembly (3), and/or
- a filter frame (8) for retaining the filter element (1), and/or
- a sealing element (9), which is mounted on the filter element (1), and/or
- the housing (20).

4. Filter arrangement according to one of Claims 1 to 3, **characterized in that**
the encircling gel channel (4.1) is mounted on the filter element (1) or on the housing (20).

5. Filter arrangement according to one of the preceding claims, **characterized in that**
the filter material (2) is in the form of a pleated fold assembly (3).

6. Filter arrangement according to one of the preceding claims, **characterized in that**
at least one further filter element (1) is provided in a further filter stage, wherein the further filter element (1) has a filter material (2) for the filtration of an air stream, and a further encircling gel seal (4) is arranged between the first filter element and the at least one further filter element (1) in order to seal the filter elements (1) in relation to one another.

7. Filter arrangement according to one of Claims 1-5, **characterized in that**
at least one further filter element (1) is provided in a further filter stage, wherein the further filter element (1) comprises a filter material (2) for the filtration of an air stream, and a respective encircling gel seal (4) is arranged between a respective filter element (1) and the housing (20) in order to seal a respective filter element (1) in relation to the housing (20).

8. Filter arrangement according to one of Claims 6 or 7, **characterized in that**
the filter arrangement (10) is equipped with a fastening mechanism (21), which defines the position of the tongue (5) in the gel channel (4.1) of the further encircling gel seal (4) between the first filter element and the at least one further filter element (1), and in particular defines and delimits the penetration depth of the tongue (5) in the gel channel (4.1).

9. Use of a filter arrangement according to one of the preceding claims as a cabin air filter for the filtration of the cabin air supply in a vehicle.

10. Use of a filter arrangement according to Claim 8 as a fresh-air filter for the filtration of the cabin air supply in an agricultural vehicle.

11. Use of a filter arrangement according to one of Claims 9 or 10 having a filter arrangement according to one of Claims 1 to 5, wherein the filter element is used in the first filter stage.

12. Use of a filter arrangement according to one of Claims 1 to 8 as a cathode air supply filter in a fuel cell system.

## Revendications

1. Agencement de filtre (10) avec un élément de filtre (1) dans un premier étage de filtre, l'élément de filtre (1) présentant un matériau de filtre (2) pour filtrer un courant d'air, et avec un boîtier (20) pour recevoir l'élément de filtre (1),
un joint d'étanchéité en gel périphérique (4) étant agencé entre l'élément de filtre (1) et le boîtier (20) avec un canal de gel (4.1) pour étanchéifier l'élément de filtre (1) par rapport au boîtier (20),
l'agencement de filtre (10) possédant une entretoise périphérique (5) qui plonge dans le canal de gel (4.1), **caractérisé en ce que** l'agencement de filtre (10) possède un élément de recouvrement périphérique (6) pour recouvrir le canal de gel (4.1) sur le côté du gaz brut (A) de l'agencement de filtre (10).

2. Agencement de filtre selon la revendication 1, **caractérisé en ce que** l'entretoise (5) est formée par
- un pli d'extrémité (3.1) du matériau de filtre (2) et/ou
- une bande de bord (7) fixée, notamment collée, au paquet de plis (3) et/ou
- une traverse (8.1) dépassant d'un cadre de filtre (8) et/ou
- une traverse (20.1) dépassant du boîtier (20).

3. Agencement de filtre selon la revendication 1 ou 2, **caractérisé en ce que** l'élément de recouvrement (6) est formé par
- une languette en forme de bande (3.2) sur le pli d'extrémité (3.1) du matériau de filtre (2), et/ou
- une languette en forme de bande (7.1) sur une bande de bord (7) fixée, notamment collée, au paquet de plis (3) et/ou
- un cadre de filtre (8) pour maintenir l'élément de filtre (1) et/ou
- un élément d'étanchéité (9) disposé sur l'élément de filtre (1) et/ou
- le boîtier (20).

4. Agencement de filtre selon l'une quelconque des revendications 1 à 3, **caractérisé en ce que** le canal de gel périphérique (4.1) est disposé sur l'élément de filtre (1) ou sur le boîtier (20).

5. Agencement de filtre selon l'une quelconque des revendications précédentes, **caractérisé en ce que** le matériau de filtre (2) est configuré sous forme de paquet de plis plissés (3).

6. Agencement de filtre selon l'une quelconque des revendications précédentes, **caractérisé en ce qu'**au moins un autre élément de filtre (1) est prévu dans un autre étage de filtre, l'autre élément de filtre (1) présentant un matériau de filtre (2) pour filtrer un courant d'air, et entre le premier et l'au moins un autre élément de filtre (1) est agencé un autre joint d'étanchéité en gel périphérique (4) pour étanchéifier les éléments de filtre (1) les uns par rapport aux autres.

7. Agencement de filtre selon l'une quelconque des revendications 1 à 5, **caractérisé en ce qu'**au moins un autre élément de filtre (1) est prévu dans un autre étage de filtre, l'autre élément de filtre (1) présentant un matériau de filtre (2) pour filtrer un courant d'air, et entre un élément de filtre respectif (1) et le boîtier (20) est respectivement agencé un joint d'étanchéité en gel périphérique (4) pour étanchéifier un élément de filtre respectif (1) par rapport au boîtier (20).

8. Agencement de filtre selon l'une quelconque des revendications 6 ou 7, **caractérisé en ce que** l'agencement de filtre (10) est équipé d'un mécanisme de fixation (21) qui définit la position de l'entretoise (5) dans le canal de gel (4.1) de l'autre joint d'étanchéité en gel périphérique (4) entre le premier et l'au moins un autre élément de filtre (1) et qui définit et limite notamment la profondeur de pénétration de l'entretoise (5) dans le canal de gel (4.1).

9. Utilisation d'un agencement de filtre selon l'une quelconque des revendications précédentes en tant que filtre à air d'espace intérieur pour filtrer l'air d'alimentation de la cabine dans un véhicule.

10. Utilisation d'un agencement de filtre selon la revendication 8 en tant que filtre à air frais pour filtrer l'air d'alimentation de la cabine dans un véhicule utilisé pour l'agriculture.

11. Utilisation d'un agencement de filtre selon l'une quelconque des revendications 9 ou 10 avec un agencement de filtre selon l'une quelconque des revendications 1 à 5, l'élément de filtre étant utilisé dans le premier étage de filtre.

12. Utilisation d'un agencement de filtre selon l'une quelconque des revendications 1 à 8 en tant que filtre à air d'alimentation de cathode dans un système de pile à combustible.
